# EUROPÄISCHE PATENTANMELDUNG

(11) **EP 2 241 491 A2**
(43) Veröffentlichungstag der Anmeldung: **20.10.2010**
(21) Anmeldenummer: 10003113.7
(22) Anmeldetag: 24.03.2010
(51) Int. Cl.: B62B 5/04

(54) **Fahrbare Vorrichtung mit Rädern**

(30) Priorität: 15.04.2009 DE 202009005601 U
(71) Anmelder: NH Nobelherbergen Immobilien- und Handelsgesellschaft mbH, 52249 Eschweiler (DE)
(72) Erfinder: Außenhofer, Holger, 52249 Eschweiler (DE)
(74) Vertreter: Patentanwälte Buse, Mentzel, Ludewig

(57) **Zusammenfassung**

Die Erfindung betrifft eine fahrbare Vorrichtung mit Rädern (20) und mit einer Handhabe (10), an welcher die Vorrichtung von einer Bedienperson manuell verfahrbar ist. Des Weiteren ist wenigstens eine Bremse (21) vorgesehen, welche einen Freigabezustand besitzt, in welchem die Räder (20) um ihre Achse rotationsbeweglich sind und die Vorrichtung verfahrbar ist und welche über einen Sperrzustand verfügt, in welchem die Rotationsbewegung wenigstens eines der Räder (20) gebremst wird und die Vorrichtung nicht mehr verfahrbar ist. Die Erfindung schlägt nun vor, dass die Bremse (21) bzw. Bremsen sich normalerweise in ihrem Sperrzustand befinden, dass aber an der Handhabe (10) ein federbelastetes (13) Betätigungselement (11) vorgesehen ist, welches bei Betätigung durch eine Bedienperson unter Zwischenschaltung eines Übertragungsmittels (30) die Bremse (21) bzw. die Bremsen in den Freigabezustand überführt wodurch die Vorrichtung verfahrbar ist (Fig. 2).

## Beschreibung

Die Erfindung betrifft eine fahrbare Vorrichtung der im Oberbegriff des Anspruchs 1 genannten Art. Solche Vorrichtungen finden vielfach Verwendung, so beispielsweise als Werkstattwagen, Servicewagen, auch im Flugzeug, in Schiffen und Eisenbahnen, Einkaufswagen, Transportwagen oder auch als Unterbau für Betriebseinrichtungen. Auch eine Verwendung bei Krankenbetten, Rollstühlen und Gehhilfen ist denkbar.

Bei herkömmlichen Vorrichtungen dieser Art ist es üblich, dass eine Bedienperson eine an der Vorrichtung befindliche Handhabe manuell erfasst und die Vorrichtung so in die gewünschte Richtung bewegt. Soll die Vorrichtung dann an einer Stelle abgestellt werden, beispielsweise um sie zu be- bzw. entladen, um mit den auf der Vorrichtung angeordneten Gegenständen Arbeiten auszuführen oder um die Vorrichtung irgendwo zu lagern, so wird von der Bedienperson eine Feststellbremse betätigt. Diese ist zumeist an einem oder mehreren der Räder der Vorrichtung angeordnet und kann üblicherweise durch Druck mit dem Fuß der Bedienperson auf ein Bedienelement betätigt werden. Soll die Vorrichtung dann weiterbewegt werden, muss die Bremse zunächst wieder gelöst werden. Dies geschieht häufig auch durch eine Betätigung mittels des Fußes der Bedienperson. Oft ist eine solche Betätigung aber schwierig, insbesondere wenn die Bedienperson beispielsweise bei der Arbeit mit Werkstattwagen und Betriebseinrichtungen Sicherheitsschuhe trägt. Außerdem ist es ungünstig, wenn nur eines der Räder gebremst wird und die Vorrichtung auf einer Schrägfläche abgestellt wird. Die Vorrichtung wird sich dann um das gebremste Rad verschwenken, was zu Unfällen und Sachschäden führen kann. Darüber hinaus muss sichergestellt sein, dass die mit der Bremse versehenen Räder aus der Vorrichtung herausragen, damit eine Betätigung der Bremse mittels des Fußes der Bedienperson überhaupt möglich ist.

Ein weiteres Problem stellt sich, wenn die Bedienperson die Vorrichtung versehentlich loslässt, insbesondere wenn die Vorrichtung sich auf einer Schrägfläche befindet. Selbst wenn die Richtwerte, die durch die Arbeitsstätten-Richtlinie (ASR) 17/1, 2 Abs. 3.2 für Anforderungen an Rampen in Arbeitsbereichen vorgegeben werden, eingehalten werden, kann es zu Unfällen kommen. Durch die Gewichtskraft der Vorrichtung gewinnt diese nämlich an Geschwindigkeit, was zu teilweise schweren Unfällen mit Personen- und Sachschäden führen kann. Gerade bei Vorrichtungen, die ein hohes Eigengewicht haben oder schwere Gegenstände beinhalten, ist dies kritisch. Selbst wenn die Bedienperson es schafft die Vorrichtung einzuholen, kann es sein, dass die Kraft der Bedienperson nicht ausreicht, um die Vorrichtung abzubremsen.

Aufgabe der Erfindung ist es daher, eine Vorrichtung der eingangs beschriebenen Art zu schaffen, welche die vorgenannten Nachteile vermeidet und welche ein sicheres Wirksamsetzen und Unwirksamsetzen der Bremse ermöglicht. Diese Aufgabe wird durch die kennzeichnenden Merkmale von Anspruch 1 gelöst, denen folgende besondere Bedeutung zukommt.

Die Bremse bzw. die Bremsen befinden sich normalerweise im Sperrzustand. An der Handhabe ist jedoch ein federbelastetes Betätigungselement vorgesehen, welches bei Betätigung durch eine Bedienperson die Bremse bzw. Bremsen in den Freigabezustand überführt. Dies geschieht durch Zwischenschaltung eines Übertragungsmittels zwischen dem Betätigungselement und der Bremse bzw. den Bremsen. Die Vorrichtung ist bei betätigtem Betätigungselement von der Bedienperson bewegbar. Möchte die Bedienperson nunmehr die Vorrichtung abstellen, um diese beispielsweise zu be- oder entladen oder um Arbeiten durchzuführen, braucht die Bedienperson nur das Betätigungselement loszulassen und die Bremse bzw. die Bremsen werden automatisch wieder in ihren Sperrzustand überführt. Dies ist besonders vorteilhaft, wenn der Boden, auf dem die Vorrichtung zum Stehen kommen soll, abschüssig oder selbst bewegbar ist, wie dies beispielsweise bei Flugzeugen, Eisenbahnen und Schiffen der Fall ist. Selbst wenn die in der ASR 17/1, 2 Abs. 3.2 vorgegebenen Richtwerte überschritten werden, kann die Vorrichtung nicht unkontrolliert die Schrägfläche herunterfahren. Es kann auch nicht passieren, dass die Bedienperson vergisst, die Bremse zu betätigen, was zu Unfällen führen kann. Auch ist die Betätigung durch das Lösen der Bremse für die Bedienperson vereinfacht, da die Handhabe der Vorrichtung zum Bewegen der Vorrichtung von der Bedienperson normalerweise gegriffen wird.

Ein weiterer Vorteil der erfindungsgemäßen Vorrichtung ergibt sich für die Fälle, in denen die Bedienperson die Kontrolle über die Vorrichtung verliert, beispielsweise, wenn ihr diese aus der Hand rutscht oder die Bedienperson stolpert. In dem Moment, wo die Bedienperson nicht mehr das an der Handhabe befindliche Betätigungselement betätigt, wird die Bremse sofort in ihren Sperrzustand überführt. Die Vorrichtung bremst somit ab und kann nicht unkontrolliert, beispielsweise auf abschüssiger Ebene, weiterfahren und so ggf. Unfälle verursachen.

Besonders bevorzugt wird die Bremse so angeordnet, dass sie vorgespannt ist, und dadurch in ihrem Sperrzustand verbleibt. Erst durch die Betätigung des Betätigungselements wird die Bremse mit einer entgegengesetzten Spannung beaufschlagt bzw. die Hydraulikleitung unter Druck gesetzt. Hierdurch ist das System wartungsfrei und damit sehr benutzerfreundlich. Auch ein Wechsel von Bremsbelägen oder Bremsbacken ist normalerweise nicht notwendig, da kein in Bewegung befindliches Teil gebremst wird sondern ein in Ruhe befindliches Teil arretiert wird.

In einem bevorzugten Ausführungsbeispiel werden wenigstens zwei der Räder der Vorrichtung im Sperrzustand der Bremse gebremst. Dies hat den Vorteil, dass auf einem schiefen Untergrund sich die Vorrichtung nicht ihrer Gewichtskraft folgend um das eine gebremste Rad verschwenken kann, wodurch ebenfalls Unfälle geschehen könnten. Die Gefahr des Verschwenkens besteht jedoch nicht, wenn wenigstens zwei der Räder der Vorrichtung gebremst werden.

Weitere Vorteile und Ausführungsformen der Erfindung ergeben sich aus der nachfolgenden Beschreibung, den Unteransprüchen sowie den Zeichnungen. In den Zeichnungen ist die Erfindung in mehreren Ausführungsbeispielen dargestellt. Es zeigen:
- Fig. 1: eine erfindungsgemäße fahrbare Vorrichtung in perspektivischer Darstellung mit Scheibenbremse,
- Fig. 2: eine erste Ausführungsform einer Bremse für die erfindungsgemäße Vorrichtung,
- Fig. 3: eine zweite Ausführungsform der erfindungsgemäßen Vorrichtung in Draufsicht,
- Fig. 4: eine dritte Ausführungsform einer Bremse an der erfindungsgemäßen Vorrichtung,
- Fig. 5: die Handhabe mit Betätigungselement,
- Fig. 6: ein Detail aus Fig. 5, wobei das Betätigungselement im unbetätigten Zustand ist,
- Fig. 7: eine Darstellung gemäß Fig. 6, wobei jedoch das Betätigungselement im Betätigungszustand ist.
- Fig. 8: eine weitere Ausführungsform der Erfindung in einer Darstellung gemäß Fig. 5
- Fig. 9: die Ausführungsform aus Fig. 8 in Seitenansicht
- Fig. 10: eine weitere Ausführungsform der Erfindung in einer Darstellung gemäß Fig. 5
- Fig. 11: die Ausführungsform aus Fig. 10 in Seitenansicht

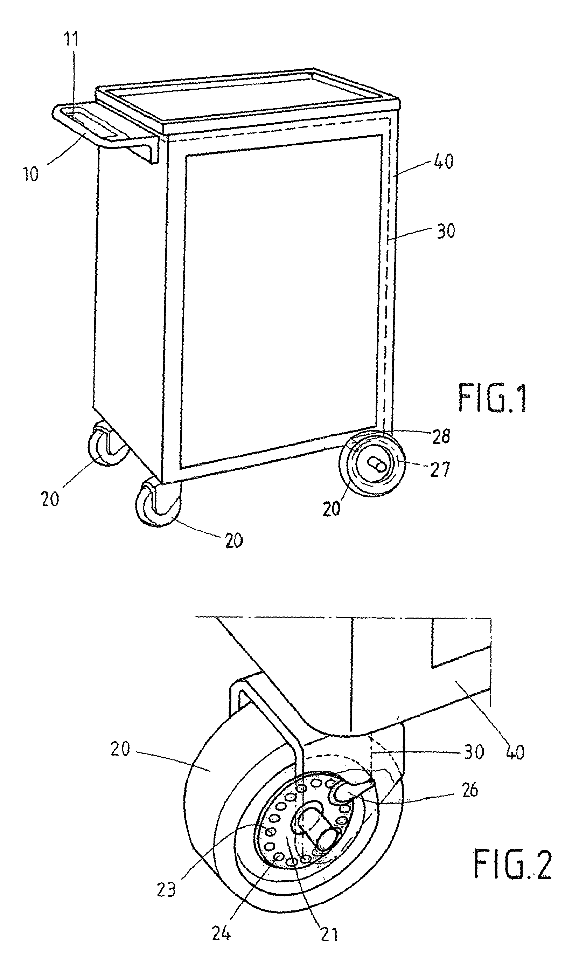

Fig. 1 zeigt die erfindungsgemäße Vorrichtung in perspektivischer Darstellung. Die Vorrichtung verfügt über vier Räder 20. Über die Handhabe 10 kann die Vorrichtung von einer Bedienperson verfahren werden. Hierbei sind die beiden vorderen Räder 20 gegenüber der Vorrichtung auch in einer Vertikalachse drehbar gelagert, damit die Vorrichtung in nahezu jede beliebige Richtung bewegt werden kann. Die hinteren Räder 20 hingegen sind starr ausgebildet. Das Übertragungsmittel 30, welches die Betätigung des Betätigungselements 11 auf die Bremse 21 überträgt, ist im Inneren des Gehäuses 40 der Vorrichtung angeordnet, wodurch es vor Verschmutzungen, Beschädigungen und Manipulationen geschützt ist.

Das hintere starre Rad 20 in gebremst. Hierzu ist eine Scheibenbremse vorgesehen. Die in Fig. 1 gestrichelt angedeutete Bremsscheibe 27 ist konzentrisch zum Rad 20 angeordnet und kleiner ausgebildet als das Rad 20. Der zugehörige Bremssattel 28 ist hier am Gehäuse 40 der Vorrichtung angebracht. Normalerweise stehen die Bremsbeläge des Bremssattels 28 mit der Bremsscheibe 27 in Eingriff, so dass sich die Bremse 21 in ihrem Sperrzustand befindet. Wird das Betätigungselement 11 jedoch betätigt, so werden die Bremsbeläge von der Bremsscheibe 27 wegbewegt, so dass die Bremse 21 in ihren Freigabezustand überführt wird.

Fig. 2 zeigt eine bevorzugte Ausführungsform der Vorrichtung. Man erkennt die Ausnehmungen 24 am Rad 20. Diese Ausnehmungen 24 weisen jeweils Vorsprünge 23 auf. Des Weiteren ist ein Bolzengehäuse 26 vorgesehen, an welchem ein hier nicht dargestellter Bolzen angeordnet ist, welcher einen Gegenvorsprung zum Vorsprung 23 aufweist. Ist das Betätigungselement 11 in seinem unbetätigten Zustand, so steht der Bolzen mit seinem Gegenvorsprung in Eingriff mit einem Vorsprung 23 an einer Ausnehmung 24 der Bremse 21. Eine Rotation des Rades 20 um seine Achse ist so nicht möglich und die Vorrichtung ist gebremst. Wird nun jedoch das Betätigungselement 11 betätigt, so wird durch das Übertragungsmittel 30 diese Betätigung auf den im Bolzengehäuse 26 befindlichen Bolzen übertragen und dieser zieht sich zurück, so dass der Vorsprung 23 und Gegenvorsprung wieder außer Eingriff gelangen und eine Rotation des Rades 20 problemlos möglich ist. Der Bolzen bewegt sich vorliegend in einer Richtung parallel zur Rotationsachse des Rades 20. Das Übertragungsmittel 30 wird auch in diesem Ausführungsbeispiel wieder innerhalb des Gehäuses 40 der Vorrichtung geführt.

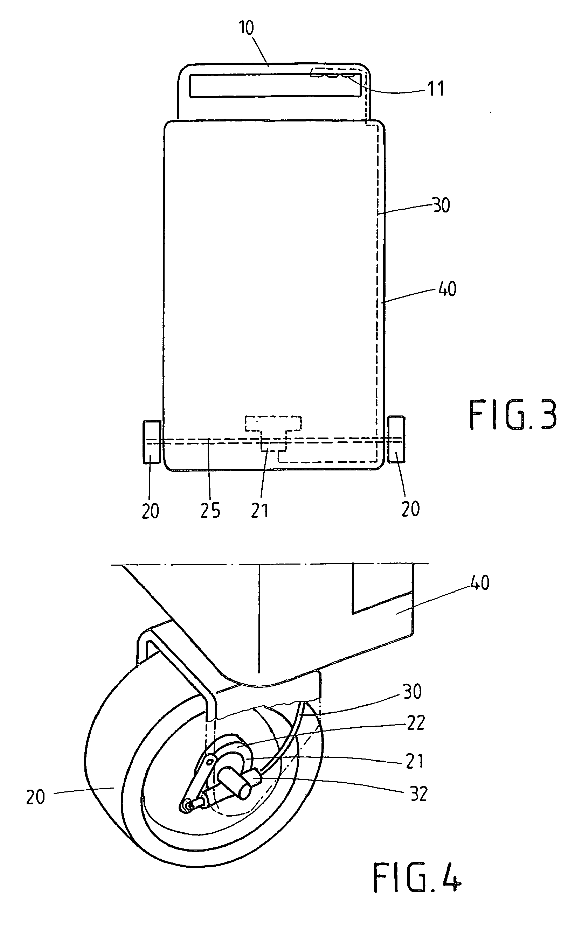

Fig. 3 zeigt eine weitere Ausführungsform der erfindungsgemäßen Vorrichtung. Die beiden starren Räder 20 sind hier mittels einer Achse 25 miteinander verbunden, wodurch die Rotationsbewegung dieser beiden Räder 20 synchron erfolgt. Des Weiteren ist eine Bremse 21 vorgesehen, welche im vorliegenden Ausführungsbeispiel die Rotationsbewegung der Achse 25 und somit auch die Rotationsbewegung der beiden Räder 20 blockiert. Selbstverständlich ist es auch möglich, eines der beiden mit der Achse 25 verbundenen Räder 20 zu bremsen, um eine Blockade beider Räder 20 zu realisieren. Verwendet man keine Achse 25, so können auch zwei Bremsen 21 vorgesehen sein, um die beiden Räder 20 zu bremsen.

Ein weiteres Ausführungsbeispiel der erfindungsgemäßen Vorrichtung zeigt Fig. 4. Das Rad 20 wird hier mittels einer Trommelbremse 22 gebremst. Diese Trommelbremse 22 ist im Inneren des Rades 20 angeordnet. Da die Trommelbremsen 22 üblicherweise von einem Gehäuse umschlossen sind, ergibt sich hier auch der Vorteil, dass durch auf dem Boden befindliches Öl oder andere Flüssigkeiten die Bremsleistung nicht gemildert wird, da diese Flüssigkeiten nicht bis in die Trommelbremse 22 eindringen können. Ähnliche Vorteile ergeben sich auch bei der Verwendung von Scheibenbremsen. Werden die Bremsen 21 als Scheibenbremsen ausgeführt, so ist es sinnvoll, wenn die Bremsscheibe einen kleineren Durchmesser als das Rad 20 aufweist. Die Bremsscheibe sollte außerdem noch auf der der Innenseite der Vorrichtung zugekehrten Seite des Rades 20 angeordnet sein, um Beschädigungen zu vermeiden. Wie die Trommelbremse 22, so hat auch die Scheibenbremse den Vorteil, dass die Bremsscheibe sowie die zugehörigen Bremssättel nicht durch Öl oder andere ggf. auf dem Boden befindlichen Stoffe verunreinigt werden kann und so die Bremsleistung herabgesetzt werden könnte.

Ein weiterer Vorteil bei der Verwendung von Trommel- 22 oder Scheibenbremsen ergibt sich dann, wenn die Vorrichtung ein relativ hohes Gewicht hat und die Bedienperson es über eine abschüssige Ebene transportieren muss. Bei bekannten Vorrichtungen muss die Bedienperson mittels ihrer Körperkraft gegen die Gewichtskraft der Vorrichtung auf der abschüssigen Ebene arbeiten, um zu verhindern, dass die Vorrichtung auf der abschüssigen Ebene immer schneller wird und irgendwann die Körperkraft der Bedienperson ggf. nicht ausreicht, um die Vorrichtung zu halten. Bei der erfindungsgemäßen Vorrichtung kann die Bedienperson das Betätigungselement 11 nur teilweise betätigen, um nur eine leichte Abbremsung durch die Bremse 21 zu erzielen. Die Vorrichtung wird dadurch verlangsamt, aber nicht vollständig zum Stillstand gebracht. Die Bremskraft unterstützt in diesem Fall die Körperkraft der Bedienperson bei der Abbremsung der erfindungsgemäßen Vorrichtung.

Im vorliegenden Ausführungsbeispiel erfolgt die Übertragung des Betätigungselementes 11 auf die Bremse 21 hydraulisch 32. Selbstverständlich sind auch andere Übertragungsmittel 30 möglich, wie beispielsweise Gestänge oder ein Bowdenzug 31.

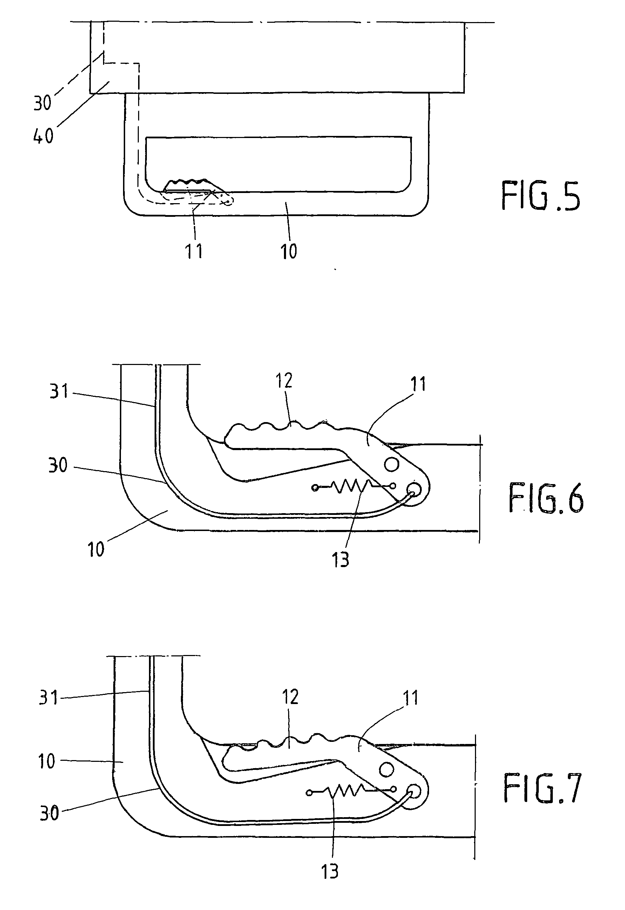

Fig. 5 zeigt nunmehr eine mögliche Anordnung eines Betätigungselementes 11 an der Handhabe 10. Das am Betätigungselement 11 angebrachte Übertragungsmittel 30 wird durch das Gehäuse 40 der Vorrichtung bis zu der Bremse 21 geführt.

Aus den Detailzeichnungen in Fig. 6 und 7 erkennt man weitere Einzelheiten. So weißt das Betätigungselement 11 eine ergonomische Form 12 auf, wodurch eine Betätigung für eine Bedienperson angenehmer gestaltet wird.

Das Betätigungselement 11 ist in Fig. 6 in seinem unbetätigten Zustand dargestellt, während Fig. 7 den betätigten Zustand zeigt. Durch die Feder 13 wird das hier als Hebel ausgeführte Betätigungselement nach dem Ende der Betätigung durch eine Bedienperson wieder in die in Fig. 6 gezeigte Lage überführt. Als Übertragungsmittel 30 dient im vorliegenden Fall ein Bowdenzug 31, der hier rein schematisch dargestellt ist. Durch die Verschwenkung des als Hebel ausgeführten Betätigungselementes 11 um seine Achse wird auch die Seele des Bowdenzuges 31 bewegt, wodurch die Betätigung des Betätigungselementes 11 an die Bremse 21 übertragen wird. Hierdurch wird eine mechanische Zugkraft durch den Bowdenzug 31 auf die Bremse 21 übertragen und die Bremse 21 gelangt in ihren Freigabezustand.

Aus Fig. 7 ist noch erkennbar, dass bei Betätigung des Betätigungselementes 11 dieses in die Handhabe 10 eingreift. Dies macht es für eine Bedienperson angenehmer, die Vorrichtung durch ein Umgreifen der Handhabe 10 festzuhalten und zu verfahren und dabei das Betätigungselement 11 in seiner betätigten Stellung zu halten.

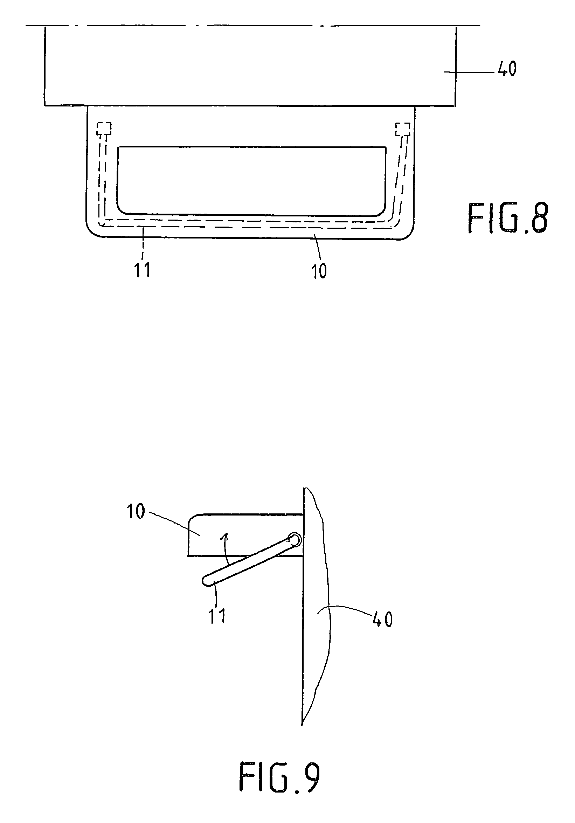

Fig. 8 und 9 zeigen eine weitere Ausführungsform der Erfindung. Als Betätigungselement 11 ist ein bügelförmiger Hebel vorgesehen, der unterhalb der Handhabe 10 angeordnet ist. Die Bedienperson, die die Vorrichtung bewegen will, umgreift die Handhabe 10 und umfasst dabei auch das Betätigungselement 11 und zieht dieses nach oben, wodurch die Bremse 21 in ihren Freigabezustand gebracht wird. Da sowohl der Hebel als auch die Bremse 21 federbelastet sind, wird die Bremse 21 wieder in ihren Sperrzustand gebracht, sobald die Bedienperson die Handhabe 10 und damit auch das Betätigungselement 11 loslässt.

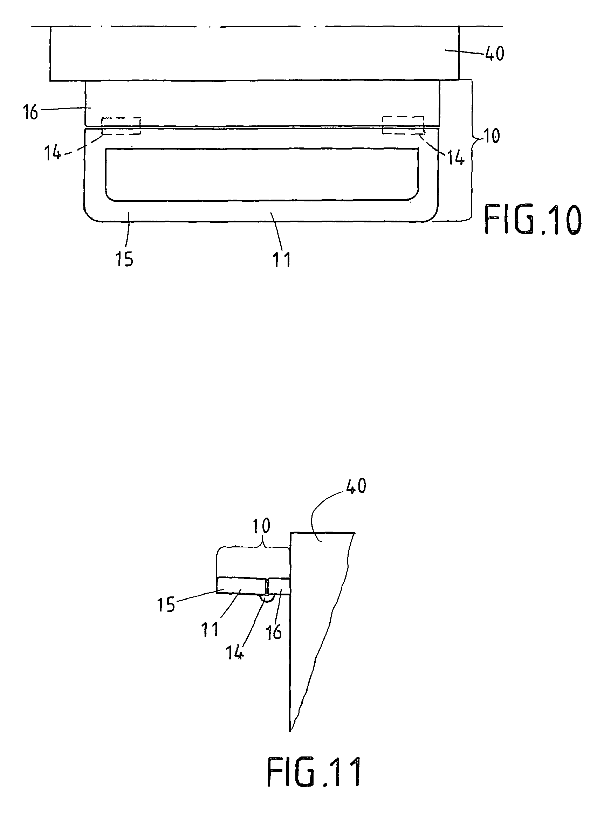

Ein weiteres Ausführungsbeispiel zeigen die Fig. 10 und 11. Hier stellt ein erster Bereich 15 der Handhabe 10 das Betätigungselement 11 dar. Dieser ist über ein oder mehrere Scharniere 14 mit dem anderen Bereich 16 der Handhabe 10 verbunden. Die Bedienperson, die die Vorrichtung bewegen will, drückt nun den ersten Bereich 15 der Handhabe 10 herunter, um die Bremse 21 von ihrem Sperrzustand in ihren Freigabezustand zu überführen. Durch die Grundbelastung der Bremse 21 und die Federbelastung des als Betätigungselement 11 fungierenden Bereichs 15 der Handhabe 10, bewegt sich die Handhabe 10 wieder in ihre in Fig. 10 und 11 dargestellte Lage sobald die Bedienperson die Handhabe 10 loslässt. Die Bremse 21 wird dann wieder in ihren Sperrzustand überführt.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich.

### Bezugszeichenliste:

- 10: Handhabe
- 11: Betätigungselement
- 12: Ergonomische Form von 11
- 13: Feder
- 14: Scharnier
- 15: Erster Bereich von 10
- 16: Anderer Bereich von 10
- 20: Rad
- 21: Bremse
- 22: Trommelbremse
- 23: Vorsprung
- 24: Ausnehmung
- 25: Achse
- 26: Bolzengehäuse
- 27: Bremsscheibe
- 28: Bremssattel
- 30: Übertragungsmittel
- 31: Bowdenzug
- 32: Hydraulik
- 40: Gehäuse

## Patentansprüche

1. Fahrbare Vorrichtung mit Rädern (20),
mit einer Handhabe (10), an welcher die Vorrichtung von einer Bedienperson manuell verfahrbar ist,
mit wenigstens einer Bremse (21), welche einen Freigabezustand besitzt, in welchem die Räder (20) um ihre Achse rotationsbeweglich sind und die Vorrichtung verfahrbar ist
und welche über einen Sperrzustand verfügt, in welchem die Rotationsbewegung wenigstens eines der Räder (20) gebremst wird und die Vorrichtung nicht mehr verfahrbar ist,
**dadurch gekennzeichnet,**
**dass** die Bremse (21) bzw. Bremsen sich normalerweise in ihrem Sperrzustand befinden,
**dass** aber an der Handhabe (10) ein federbelastetes (13) Betätigungselement (11) vorgesehen ist, welches bei Betätigung durch eine Bedienperson unter Zwischenschaltung eines Übertragungsmittels (30) die Bremse (21) bzw. die Bremsen in den Freigabezustand überführt wodurch die Vorrichtung verfahrbar ist.

2. Vorrichtung nach Anspruch 1, **dadurch gekennzeichnet, dass** wenigstens zwei der Räder (20) der Vorrichtung im Sperrzustand der Bremse (21) bzw. Bremsen gebremst werden.

3. Vorrichtung nach einem der Ansprüche 1 oder 2, **dadurch gekennzeichnet, dass** es sich bei der bzw. den Bremsen (21) um Trommelbremsen (22) handelt.

4. Vorrichtung nach einem der Ansprüche 1 oder 2, **dadurch gekennzeichnet, dass** es sich bei der bzw. den Bremsen (21) um Scheibenbremsen handelt.

5. Vorrichtung nach einem der Ansprüche 1 bis 2, **dadurch gekennzeichnet dass** als Bremse (21) bzw. Bremsen ein Vorsprung (23) am Rad (20), insbesondere an einer Ausnehmung (24), vorgesehen ist, der mit einem federbelasteten Gegenvorsprung, insbesondere an einem Bolzen, derart in Wirkverbindung bringbar ist, dass eine Bewegung des Rades (20) dann blockiert ist und der Sperrzustand erreicht wird.

6. Vorrichtung nach einem der Ansprüche 1 bis 5, **dadurch gekennzeichnet, dass** als Übertragungsmittel (30) für die Übertragung der Betätigung des Betätigungselements (11) auf die Bremse (21) bzw. Bremsen ein Bowdenzug (31) vorgesehen ist.

7. Vorrichtung nach einem der Ansprüche 1 bis 5, **dadurch gekennzeichnet, dass** als Übertragungsmittel (30) für die Übertragung der Betätigung des Betätigungselements (11) auf die Bremse (21) bzw. Bremsen ein Gestänge vorgesehen ist.

8. Vorrichtung nach einem der Ansprüche 1 bis 5, **dadurch gekennzeichnet, dass** als Übertragungsmittel (30) für die Übertragung der Betätigung des Betätigungselements (11) auf die Bremse (21) bzw. Bremsen eine Hydraulik (32) vorgesehen ist.

9. Vorrichtung nach einem der Ansprüche 1 bis 8, **dadurch gekennzeichnet, dass** zwei der Räder (20) über eine rotationsbeweglich gelagerte Achse (25) mit der Vorrichtung verbunden sind und dass die Bremse (21) die Rotationsbewegung der Achse (25) oder eines der beiden Räder (20) bremst.

10. Vorrichtung nach einem der Ansprüche 1 bis 8, **dadurch gekennzeichnet, dass** wenigstens zwei Bremsen (21) vorgesehen sind und jeweils eine Bremse (21) die Bewegung je eines Rades (20) bremst.

11. Vorrichtung nach einem der Ansprüche 1 bis 10, **dadurch gekennzeichnet, dass** die Übertragungsmittel (30) in einem Teil eines zu der Vorrichtung gehörenden Gehäuse (40) und/oder unterhalb der Vorrichtung angeordnet sind.

12. Vorrichtung nach einem der Ansprüche 1 bis 11, **dadurch gekennzeichnet, dass** das Betätigungselement (11) ergonomisch (12) geformt ist.

13. Vorrichtung nach einem der Ansprüche 1 bis 12, **dadurch gekennzeichnet, dass** das Betätigungselement (11) in seinem betätigten Zustand zumindest bereichsweise in die Handhabe (10) eingreift.
